(19) Europäisches Patentamt
European Patent Office
Office européen des brevets

(11) **EP 4 439 702 A1**

(12) **EUROPEAN PATENT APPLICATION**

(43) Date of publication:
**02.10.2024 Bulletin 2024/40**

(21) Application number: **23218001.8**

(22) Date of filing: **19.12.2023**

(51) International Patent Classification (IPC):
$H01M\ 4/133^{(2010.01)}$    $H01M\ 4/134^{(2010.01)}$
$H01M\ 4/1393^{(2010.01)}$    $H01M\ 4/1395^{(2010.01)}$
$H01M\ 4/36^{(2006.01)}$    $H01M\ 4/38^{(2006.01)}$
$H01M\ 10/052^{(2010.01)}$    $H01M\ 4/583^{(2010.01)}$
$H01M\ 4/02^{(2006.01)}$

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.03.2023 CN 202310315006**

(71) Applicant: **AESC Japan Ltd.**
**Yokohama-Shi, Kanagawa 220-0012 (JP)**

(72) Inventors:
• **SUN, Zhonggui**
**Pudong New Area Shanghai, 201315 (CN)**
• **LI, Ruonan**
**Pudong New Area Shanghai, 201315 (CN)**
• **HUANG, Peng**
**Pudong New Area Shanghai, 201315 (CN)**
• **SUN, Huayu**
**Pudong New Area Shanghai, 201315 (CN)**

(74) Representative: **Becker, Eberhard**
**Becker Kurig & Partner**
**Patentanwälte mbB**
**Bavariastraße 7**
**80336 München (DE)**

(54) **NEGATIVE ELECTRODE MATERIAL, ELECTROCHEMICAL DEVICE AND ELECTRONIC DEVICE**

(57) The disclosure relates to a negative electrode material, an electrochemical device and an electronic device. The negative electrode material includes: a carbon layer (1); and a silicon layer (2) located on at least part of the surface of the carbon layer (1). The negative electrode material satisfies the following relationship: R<0.5, wherein R is the silicon element/carbon element distribution degree of the negative electrode material, and R satisfies the following relationship:

$$R = \sqrt{\frac{(X_1 - \overline{X})^2 + (X_2 - \overline{X})^2 + \cdots (X_n - \overline{X})^2}{n}} \; ;$$

wherein

$$\overline{X} = \frac{X_1 + X_1 + \cdots + X_n}{n} \; ;$$

wherein $X_1$, $X_2$ and $X_n$ are respectively the ratios of the mass content of silicon element to the mass content of carbon element at the first point, the second point and the n-th point on the line, obtained by section-cutting the negative electrode sheet made of the negative electrode material with an argon ion etching instrument through performing a line scan analysis with the energy spectrometer, and n is the total number of points on the line.

C-Si co-deposition      Surface coating

**Description**

BACKGROUND

Technical Field

The disclosure belongs to the technical field of secondary batteries, and specifically relates to a negative electrode material, an electrochemical device and an electronic device.

Description of Related Art

Lithium-ion battery is a secondary battery (rechargeable battery) that mainly relies on the movement of lithium ions between the positive electrode and negative electrode. During the charging and discharging processes, lithium ions are intercalated or de-intercalated back and forth between positive electrode and negative electrode. During the charging process, lithium ions are de-intercalated from the positive electrode and intercalated in the negative electrode through the electrolyte. Under the circumstances, the negative electrode is in a lithium-rich state, and turned into the opposite during the discharging process. The advantages of lithium-ion include high energy density, high operating voltage, wide operating temperature range, long cycle life, low self-discharge efficiency, good safety performance, environmental friendliness and no memory effect.

As the main body for storing lithium ions, negative electrode material is an important part of lithium-ion batteries, which directly determines the overall performance of lithium-ion batteries. Silicon is a commonly adopted lithium-ion negative electrode material, and the advantages thereof lie in high theoretical capacity, low lithium insertion platform voltage, and abundant reserves. However, the volume expansion rate of silicon is very high. During the first lithium intercalation and de-intercalation process, mechanical stress is often triggered by the volume expansion effect, which reduces the contact points between the active substance and the conductive agent and binder, causing the active substance to fall off from the pole sheet. In the meantime, it is difficult to form a stable SEI film after the SEI film is ruptured and re-grown on the surface of the silicon-based active material, and the continuous consumption of electrolyte and lithium source will lead to the formation of a passivation layer, which will hinder the transportation of lithium ions and electrons, causing irreversible capacity to be too high and capacity will decay rapidly. The low electrical conductivity of silicon affects the fast charge-discharge performance and rate performance of the battery, and these factors hinders the industrialization of silicon-based materials.

In order to solve the above technical problems, practitioners have tried to use carbon to composite silicon. In existing technology, the common practice is to cover the silicon surface with a carbon material. For example, the patent document with publication number CN102709566A discloses a spherical silicon-carbon composite negative electrode material for lithium-ion batteries and a preparation method thereof, in which silicon accounts for 5% to 12 %, graphite accounts for 68% to 90%, and the rest is the carbon material. In publication no. CN102709566A, the constant temperature mixing technology is adopted to prepare a spherical precursor from silicon powder, flake graphite, and the carbon source material, and then pellet high-temperature heat treatment is performed to prepare a spherical silicon-carbon composite negative material electrode with a core of anisotropically distributed scales/silicon surface coated with a carbon material. The spherical silicon-carbon composite negative electrode material has a reversible capacity of 480 mAh/g or more, the first sequential efficiency may reach 85% or more, and the capacity retention rate is greater than 87% after 300 cycles. There are also methods that prepare silicon-carbon composite materials by mechanical mixing with carbon materials. For example, the patent document with publication number CN 113871604A discloses a silicon-containing mineral-based porous silicon-carbon composite negative electrode material and preparation method thereof. In publication no. CN 113871604A, purified samples of silicon-containing minerals, nano-silica powder and carbon-coated silicon monoxide powder are used as silicon sources, after they undergo solid-phase mixing, spray granulation and low-temperature pyrolysis, the HF concentration and reaction time are controlled to etch part of $SiO_2$ to form micron-sized macropores as a primary buffer structure, and the introduced low-expansion carbon-coated silicon monoxide serves as the secondary buffer structure. Then, the porous silicon-carbon precursor is obtained by forming mesopores and macropores as a three-level buffer structure through magnesothermal reduction and acid pickling of the intermediate products. Finally, the organic carbon source is uniformly coated on the surface of the precursor through vacuum impregnation to form a four-level buffer structure, thereby preparing a silicon-containing mineral-based porous silicon-carbon composite negative electrode material with a quadruple buffer-protected core-shell structure. The first-time efficiency of prepared silicon-containing mineral-based porous silicon-carbon composite negative electrode material is 66.7% to 70.2%, and the capacity retention rate after 100 cycles at 0.5C is 54.6% to 68.7%. However, there is room for improvement of the long cycle life of lithium-ion secondary batteries made of negative electrode sheets made of the silicon-carbon composite material prepared through the above scheme.

SUMMARY

In view of the above, the purpose of the present disclosure is to provide a negative electrode material, an electrochemical device and an electronic device, so as to further improving the long cycle life of the electrochemical device made of the negative electrode sheet made of the negative electrode material.

After conducting further research on the above scheme, the inventors found that the distribution of silicon and carbon in the negative material electrode prepared through the above method is uneven, resulting in uneven stress distribution during the charging and discharging processes of the electrochemical device made of the negative electrode sheet. As a result, the structural stability of the electrochemical device is poor, which in turn results in poor long cycle life of the electrochemical device.

In order to realize the above solution, the solution of the disclosure is as follows.

In a first aspect, the present disclosure provides a negative electrode material. The negative electrode material includes: a carbon layer; and a silicon layer located on at least part of the surface of the carbon layer. The negative electrode material satisfies the following relationship: $R \leq 0.5$, wherein R is the silicon element/carbon element distribution degree of the negative electrode material, and R satisfies the following relationship:

$$R = \sqrt{\frac{(X_1 - \overline{X})^2 + (X_2 - \overline{X})^2 + \cdots\cdots(X_n - \overline{X})^2}{n}} \; ;$$

wherein

$$\overline{X} = \frac{X_1 + X_1 + \cdots\cdots + X_n}{n} ;$$

wherein $X_1$, $X_2$ and $X_n$ are respectively the ratios of the mass content of silicon element to the mass content of carbon element at the first point, the second point and the n-th point on the line, obtained by section-cutting the negative electrode sheet made of the negative electrode material with an argon ion etching instrument through performing a line scan analysis with the energy spectrometer, and n is the total number of points on the line.

In the disclosure, the silicon element/carbon element distribution degree R of the negative electrode material is controlled within a specific selected range (silicon element/carbon element distribution degree $R \leq 0.5$), which may ensure the structural stability of the electrochemical device made of the negative electrode sheet made of the negative electrode material during the charging and discharging processes (specifically, the lithium de-intercalation process), thereby improving the long cycle life of the electrochemical device made of the negative electrode sheet made of composite materials.

In the disclosure, if the silicon element/carbon element distribution degree R of the negative electrode material is >0.5, the silicon element and carbon element will be unevenly distributed. The uneven distribution will cause uneven stress distribution of the electrochemical device made of the negative electrode sheet made of the negative electrode material during the charge and discharge processes. As a result, the structural stability of the electrochemical device is poor, which in turn results in poor long cycle life of the electrochemical device.

In some embodiments, the silicon element/carbon element distribution degree R of the negative electrode material satisfies the following relationship:

$$R \leq 0.1.$$

In some embodiments, the negative electrode material has a compacted density of 0.5 g/cm³ to 2.5 g/cm³.
In some embodiments, the negative electrode material has a compacted density of 0.9 g/cm³ to 2.5 g/cm³.
In some embodiments, the specific surface area of the negative electrode material is $\leq 15$ m²/g.
In some embodiments, the specific surface area of the negative electrode material is $\leq 8$ m²/g.

In some embodiments, the silicon layer is made of a silicon-based material with a particle size of ≤ 200 nm. The silicon-based material includes elemental silicon, silicon oxide or a mixture of both. Examples of the silicon oxide include silicon monoxide, silicon dioxide, or a mixture of both.

In some embodiments, the carbon layer is made of a carbon-based material with a particle size of ≤ 200 nm. The carbon-based material includes at least one of porous carbon, hard carbon, hollow carbon microspheres and expanded graphite.

It should be noted that in the disclosure, there is no restriction on the preparation process of negative electrode material. It is possible to adopt a high-temperature pyrolysis method, a template method (for example, using calcium carbonate as a template), a ball milling method, a vapor deposition method, a hydrothermal synthesis method, a freeze-drying method, magnetron sputtering, electrostatic self-assembly, etc., as long as the above-mentioned specific indicators of the prepared negative electrode material are within the corresponding specific selected range.

In the disclosure, there is no restriction on the manufacturing method of the negative electrode material. For example, the vapor deposition method may be adopted.

In a second aspect, the present disclosure provides an electrochemical device, which includes a negative electrode sheet. The negative electrode sheet includes a negative electrode current collector and a negative electrode active substance layer located on the negative electrode current collector. The negative electrode active substance layer includes the negative electrode material as described above.

There are no limitations on the manufacturing method of the electrochemical device.

In a third aspect, the present disclosure provides an electronic device, which includes the electrochemical device as described above.

As mentioned above, the negative electrode material, the electrochemical device and the electronic device of the present disclosure have the following advantageous effects.

By controlling the silicon element/carbon element distribution degree R of the negative electrode material within a specific selected range (silicon element/carbon element distribution degree R≤0.5), the present disclosure may ensure the structural stability of the electrochemical device made of the negative electrode sheet made of the negative electrode material during the charging and discharging processes (specifically, the lithium de-intercalation process), thereby improving the long cycle life of the electrochemical device made of the negative electrode sheet made of the negative electrode material.

BRIEF DESCRIPTION OF THE DRAWINGS

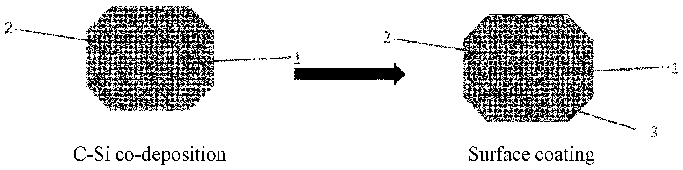

The FIGURE is a structure of the negative electrode material prepared in Example 2, where 1 is a carbon layer (that is, the carbon layer located in the inner layer), 2 is a silicon layer (that is, the silicon layer located in the inner layer), and 3 is a carbon layer for surface coating.

DESCRIPTION OF THE EMBODIMENTS

The present disclosure will be further described below through specific examples. However, it should be pointed out that the specific material ratios, process conditions and results described in the embodiments of the present disclosure are only used to illustrate the present disclosure and should not be limited thereto. All equivalent changes or modifications made based on the spirit and essence of the present disclosure should be included in the protection scope of the present disclosure.

The disclosure provides a negative electrode material with a compacted density of 0.5 g/cm$^3$ to 2.5 g/cm$^3$ and a specific surface area ≤15 m$^2$/g. The negative electrode material includes a carbon layer made of a carbon-based material with a particle size of ≤200 nm; and a silicon layer located on at least part of the surface of the carbon layer. The silicon layer is made of a silicon-based material with a particle size of ≤200 nm.

The negative electrode material satisfies the following relationship: R≤0.5, where R is the silicon element/carbon element distribution degree of the negative electrode material, and R satisfies the following relationship:

$$R = \sqrt{\frac{(X_1 - \overline{X})^2 + (X_2 - \overline{X})^2 + \cdots\cdots(X_n - \overline{X})^2}{n}} \; ;$$

wherein

$$\bar{X} = \frac{X_1 + X_1 + \cdots \cdots + X_n}{n};$$

wherein $X_1$, $X_2$ and $X_n$ are respectively the ratios of the mass content of silicon element to the mass content of carbon element at the first point, the second point and the n-th point on the line, obtained by section-cutting the negative electrode sheet made of the negative electrode material with an argon ion etching instrument through performing a line scan analysis with the energy spectrometer, and n is the total number of points on the line.

Specifically, the silicon element/carbon element distribution degree R indicates the uniformity of the distribution of silicon elements and carbon elements in the negative electrode material. By controlling the silicon element/carbon element distribution degree R of the negative electrode material within a specific selected range (silicon element/carbon element distribution degree R≤0.5), it is possible to ensure the structural stability of the electrochemical device made of the negative electrode sheet made of the negative electrode material during the charging and discharging processes (specifically, the lithium de-intercalation process), thereby improving the long cycle life of the electrochemical device made of the negative electrode sheet made of the negative electrode material.

By controlling the compaction density of the negative electrode material within a specific selected range (0.5 $g/cm^3$ to 2.5$g/cm^3$), it possible to ensure the skeleton strength of the negative electrode material, thereby further ensuring the structural stability of the electrochemical device made of the negative electrode sheet made of the negative electrode material during the charging and discharging processes (specifically, the lithium de-intercalation process), thereby improving the long cycle life of the electrochemical device made of the negative electrode sheet made of the negative electrode material. In the meantime, by controlling the compaction density of the negative electrode material within a specific selected range (0.5 $g/cm^3$ to 2.5$g/cm^3$), it is possible to increase the volumetric energy density of the battery cell of the electrochemical device made of the negative electrode sheet made of the negative electrode material.

By controlling the specific surface area of the negative electrode material within a specific selected range (≤15 $m^2/g$), it is possible to ensure limited film formation on the surface of the negative electrode material, thereby ensuring the first-time efficiency (that is, the efficiency at the first time) of the electrochemical device made of the negative electrode sheet made of the negative electrode material, thus improving the long cycle life of the electrochemical device made of the negative electrode sheet made of the negative electrode material.

In some embodiments, the present disclosure further provides an electrochemical device, which includes a negative electrode sheet. The negative electrode sheet includes a negative electrode current collector and a negative electrode active substance layer located on the negative electrode current collector. The negative electrode active substance layer includes the negative electrode material as described above.

The electrochemical device of the present disclosure includes any device that undergoes electrochemical reactions. Specific examples thereof include all types of primary batteries, secondary batteries, fuel cells, solar cells or capacitors. The electrochemical device is a sodium metal battery, and the battery includes at least one of a soft pack battery, a battery with a square aluminum housing, a battery with a square steel housing, a battery with a cylindrical aluminum housing and a battery with a cylindrical steel housing.

The following only takes a lithium-ion secondary battery as an example for illustration.

In some embodiments, the present disclosure provides an electronic device including the aforementioned electrochemical device.

The use of the electrochemical device of the present disclosure is not particularly limited, and the electrochemical device may be used in any electronic device known in the art. In some embodiments, the electrochemical device of the present disclosure may be used in, but is not limited to, notebook computers, pen-input computers, mobile computers, e-book players, portable telephones, portable fax machines, portable copiers, portable printers, head-mounted stereos headphones, video recorders, LCD TVs, portable cleaners, portable CD players, mini discs, transceivers, electronic notepads, calculators, memory cards, portable recorders, radios, backup power supplies, motors, cars, motorcycles, power-assisted bicycles, bicycles, lighting equipment, toys, game consoles, clocks, power tools, flashlights, cameras, large household batteries, energy storage and sodium-ion capacitors, etc.

The present disclosure will be described in detail below through specific examples. It should also be understood that the following examples are only used to specifically illustrate the present disclosure and cannot be understood as limiting the protection scope of the present disclosure. Some non-essential improvements and adjustments made by those skilled in the art based on the above contents of the present disclosure all belong to the protection scope of the disclosure. The specific process parameters in the following examples are only an example of the appropriate range, that is, those skilled in the art can make selections within the appropriate range through the description herein, and are not limited to the specific values exemplified below.

In the disclosure, the silicon element/carbon element distribution degree R indicates the uniformity of the distribution of silicon elements and carbon elements in the negative electrode material, which is tested specifically by the

**EP 4 439 702 A1**

following method: the prepared negative electrode material, polyacrylic acid and conductive carbon black (SP) are mixed according to the mass ratio of 8:1:1, then the solvent deionized water is added to the resulting mixture (the mass ratio of deionized water to negative electrode material is 2:1), then stirred and mixed thoroughly to obtain the negative electrode slurry. The negative electrode slurry is evenly coated on the negative electrode current collector copper foil, and after drying, cold pressing, and slitting processes, a negative electrode sheet is obtained. The negative electrode sheet made of the negative electrode material is section-cut with an argon ion etching instrument. The ratios of the mass content of silicon element to the mass content of carbon element at the first point, the second point and the n-th point on the line are obtained by performing a line scan analysis with the energy spectrometer, and n is the total number of points on the line. Then, the silicon element/carbon element distribution degree R is calculated according to the formula:

$$R = \sqrt{\frac{(X_1 - \overline{X})^2 + (X_2 - \overline{X})^2 + \cdots\cdots(X_n - \overline{X})^2}{n}} \ ;$$

wherein

$$\overline{X} = \frac{X_1 + X_1 + \cdots\cdots + X_n}{n} \ ;$$

wherein $X_1$, $X_2$ and $X_n$ are respectively the ratios of the mass content of silicon element to the mass content of carbon element at the first point, the second point and the n-th point on the line, obtained by section-cutting the negative electrode sheet made of the negative electrode material with an argon ion etching instrument through performing a line scan analysis with the energy spectrometer, and n is the total number of points on the line.

In the disclosure, the compacted density is tested in accordance with "GB/T 24533-2019 Graphite negative electrode materials for lithium ion battery".

In the disclosure, the specific surface area is tested in accordance with the dynamic chromatography method in "GB/T 39713-2020 Testing mothed for specific surface area of ceramic powders - BET gas adsorption operation".

In the disclosure, the steps for testing first-time efficiency and cycle life are as follows:

(1) Preparation of positive electrode sheet: A positive electrode material NCM811 (i.e. $LiNi_{0.8}Co_{0.1}Mn_{0.1}O_2$), the conductive agent Super P (i.e. highly conductive carbon black) and the binder polyvinylidene fluoride (PVDF) are mixed according to a weight ratio of 97:1.5:1.5 to obtain a mixture. The solvent N-methylpyrrolidone (i.e. NMP) is added to the mixture, the mass ratio of NMP to the positive electrode material NCM811 is 1:1, and stirred and mixed thoroughly to obtain a positive electrode slurry. The positive electrode slurry is coated on the positive electrode current collector aluminum foil, and after drying, cold pressing, and slitting processes, the positive electrode sheet is obtained.

(2) Preparation of negative electrode sheet: The sample, the polyacrylic acid and the conductive carbon black (SP) are mixed according to the mass ratio of 8:1:1, then the solvent deionized water is added to the resulting mixture, the mass ratio of the deionized water and the sample is 2:1, and stirred and mixed thoroughly to obtain a negative electrode slurry. The negative electrode slurry is evenly applied on the negative electrode current collector copper foil, and after drying, cold pressing, and slitting processes, the negative electrode sheet is obtained.

(3) Preparation of electrolyte

The ethylene carbonate (EC), the ethyl methyl carbonate (EMC) and the diethyl carbonate (DEC) are mixed in a volume ratio of 1:1:1 to obtain a mixed solvent, and then the fully dried lithium hexafluorophosphate ($LiPF_6$) is dissolved in the mixed solvent to prepare an electrolyte with a concentration of 1 mol/L.

(4) Preparation of separator

A polyethylene (PE) porous film with a thickness of 11 $\mu$m, an air permeability of 280 s/100mL and a porosity of 40% is adopted as the separator.

(5) Preparation of lithium-ion secondary batteries

The prepared positive electrode sheet, the separator, and the negative electrode sheet are stacked in sequence so that the separator is between the positive electrode sheet and the negative electrode sheet to separate them. Then, they are wrapped with an aluminum plastic film, and after drying, the electrolyte prepared above is injected. After packaging, standing, forming and other processes, the final product is assembled into a 3020-type button battery, which is a lithium-ion secondary battery.

Test is performed on the first-time efficiency and cycle performance of each prepared lithium-ion secondary battery. The specific steps are: cycles are carried out with a charge and discharge program of charging from 0.1 C to 1.5 C and discharging from 0.1 C to 5 mV to test the first-time efficiency and cycle performance.

The first-time efficiency is calculated according to the formula: first-time efficiency = first-week charging gram capacity / first-week discharge gram capacity $\times$ 100%; first-week charging gram capacity = first-week charging capacity / (negative electrode piece mass $\times$ 0.8), first-week discharge gram capacity = first-week discharge capacity /(mass of negative electrode sheet $\times$ 0.8).

The cycle performance is: when cycled to 80% SOH, the corresponding number of cycles is the cycle performance. 80% SOH is defined as follows: when the discharge capacity of the battery divided by the discharge capacity of the first cycle of the cycle is 80%, the corresponding number of cycles is the cycle performance of the battery cell.

Example 1

The embodiment provides a method for preparing a negative electrode material. The specific steps are as follows.

Step S1. The vapor deposition method is adopted to alternately deposit carbon and silicon. Specifically, in a sealed chamber under the protective gas atmosphere (nitrogen), first the carbon source methane is introduced into the sealed chamber, and heated to make the internal ambient temperature of the sealed chamber to rise to 850 °C. Carbon is deposited at a temperature of 850 °C, the deposition time of carbon is 10 minutes, the flow rate of nitrogen is 20 L/min, and the flow rate of methane is 10 L/min, so that the deposition rate of carbon is 10 nm/min, and the unit size of carbon deposited in a single time is 100 nm. Then, silane is introduced into the sealed chamber, the deposition time of silicon is 2 minutes, and the flow rate of silane is 5 L/min, so that the ratio of deposition rate of carbon to deposition rate of silicon is 5: 1, the particle size of silicon deposited in a single time is 4 nm (particle size of silicon deposited in a single time = deposition rate of carbon /(ratio of deposition rate of carbon to deposition rate of silicon) $\times$ deposition time of silicon). The particle size of the carbon deposited in a single time is 100 nm (the particle size of the carbon deposited in a single time = deposition rate of carbon $\times$ deposition time of carbon). In this way, the depositions are alternately carried out, and the deposition rate and time remain unchanged during the alternating deposition process, and a product A is obtained.

Step S2. The product A obtained in step S1 is subjected to coarse crushing, and then is ground and classified by an airflow mill. During the airflow grinding and classification process, the spindle speed is 3000 rpm, the power is 1000 W, and the compressor displacement is 20 m$^3$/min, then a product B with D50 of 6 $\mu$m is obtained.

Step S3. A product C is prepared by using the liquid phase method from the product B obtained in step S2. Specifically, the product B and carbon source glucose-soluble material are mixed at a mass ratio of 1:1, and then the mixture is heated to 60°C and subjected to a water bath reaction at 60 °C for 12 hours, so that a cross-linking reaction is occurred between the carbon source and the surface of a product 2, followed by washing, and then vacuum drying at 100 °C for 48 hours to obtain a product C.

Step S4. A product 3 is pyrolyzed and carbonized at a temperature of 950 °C. The pyrolysis and carbonization time is 4 hours to deposit and grow a surface carbon layer on the surface of the product C. The thickness of the surface carbon layer is controlled within 30 nm to obtain a negative electrode material.

Example 2

The negative electrode material is prepared in the same manner as Example 1 except for the following conditions.

Step S1. The vapor deposition method is adopted to alternately deposit carbon and silicon. Specifically, in a sealed chamber under the protective gas atmosphere (nitrogen), first the carbon source methane is introduced into the sealed chamber, and heated to make the internal ambient temperature of the sealed chamber to rise to 850 °C. Carbon is deposited at a temperature of 850 °C, the deposition time of carbon is 10 minutes, the flow rate of nitrogen is 20 L/min, and the flow rate of methane is 10 L/min, so that the deposition rate of carbon is 10 nm/min, and the unit size of carbon deposited in a single time is 100 nm. Then, silane is introduced into the sealed chamber, the deposition time of silicon is 2 minutes, and the flow rate of silane is 12.5 L/min, so that the ratio of deposition rate of carbon to deposition rate of silicon is 2: 1, the particle size of silicon deposited in a single time is 10 nm (particle size of silicon deposited in a single time = deposition rate of carbon × deposition rate of carbon /(ratio of deposition rate of carbon to deposition rate of silicon) × deposition time of silicon). The particle size of the carbon deposited in a single time is 100 nm (the particle size of the carbon deposited in a single time = deposition rate of carbon × deposition time of carbon). In this way, the depositions are alternately carried out, and the deposition rate and time remain unchanged during the alternating deposition process, and a product A is obtained.

The negative electrode material prepared in this embodiment is shown in the FIGURE, where 1 is a carbon layer, 2 is a silicon layer, and 3 is a carbon layer for surface coating.

Example 3

The negative electrode material is prepared in the same manner as Example 1 except for the following conditions.

Step S1. The vapor deposition method is adopted to alternately deposit carbon and silicon. Specifically, in a sealed chamber under the protective gas atmosphere (nitrogen), first the carbon source methane is introduced into the sealed chamber, and heated to make the internal ambient temperature of the sealed chamber to rise to 850 °C. Carbon is deposited at a temperature of 850 °C, the deposition time of carbon is 10 minutes, the flow rate of nitrogen is 20 L/min, and the flow rate of methane is 10 L/min, so that the deposition rate of carbon is 10 nm/min, and the unit size of carbon deposited in a single time is 100 nm. Then, silane is introduced into the sealed chamber, the deposition time of silicon is 2 minutes, and the flow rate of silane is 25 L/min, so that the ratio of deposition rate of carbon to deposition rate of silicon is 1:1, the particle size of silicon deposited in a single time is 20 nm (particle size of silicon deposited in a single time = deposition rate of carbon / (ratio of deposition rate of carbon to deposition rate of silicon) × deposition time of silicon). The particle size of the carbon deposited in a single time is 100 nm (the particle size of the carbon deposited in a single time = deposition rate of carbon × deposition time of carbon). In this way, the depositions are alternately carried out, and the deposition rate and time remain unchanged during the alternating deposition process, and a product A is obtained.

Example 4

The negative electrode material is prepared in the same manner as Example 1 except for the following conditions.

Step S4. The product 3 is pyrolyzed and carbonized at a temperature of 700 °C. The pyrolysis and carbonization time is 4 hours to deposit and grow a surface carbon layer on the surface of the product 3. The thickness of the surface carbon layer is controlled within 2 nm to obtain a negative electrode material.

Comparative Example 1

This Comparative Example provides a method for preparing a negative electrode material. The specific steps are as follows.

Step S1. The vapor deposition method is adopted to prepare carbon. Specifically, in a sealed chamber under the protective gas atmosphere (nitrogen, doped with ammonia gas, the doping amount of ammonia is 2 wt%), the carbon source methane is introduced into the sealed chamber, and heated to make the internal ambient temperature of the sealed chamber to rise to 850 °C. Carbon is deposited at a temperature of 850 °C, the deposition time of carbon is 3 hours, the flow rate of nitrogen (doped with ammonia gas, the doping amount of ammonia is 2 wt%) is 20 L/min, and the flow rate of methane is 60 L/min, so that the deposition rate of carbon is 60 nm/min, and an elemental carbon A1 is obtained.

The vapor deposition method is adopted to prepare silicon. Specifically, in a sealed chamber under the protective gas atmosphere (nitrogen, doped with ammonia gas, the doping amount of ammonia is 2 wt%), the carbon source methane is introduced into the sealed chamber, and heated to make the internal ambient temperature of the sealed chamber to rise to 850 °C. Silicon is deposited at a temperature of 850 °C for 3 hours, the flow rate of silane is 50 L/min, the deposition rate of silicon is 100 nm/min, and an elemental silicon A2 is obtained.

Step S2. The elemental silicon A2 and elemental carbon A1 obtained in step S1 are coarsely crushed, and then ground and classified through an airflow mill. During the airflow mill grinding and classification process, the spindle speed is 3000 rpm, the power is 1000 W, and the compressor displacement is 20 m$^3$/min, and an elemental silicon with D50 of 6 μm and an elemental carbon with D50 of 6 μm are obtained.

Step S3. The elemental silicon with a D50 of 6 μm and the elemental carbon with a D50 of 6 μm obtained in step S2 are mechanically mixed according to a mass ratio of 1:1.

Step S4. The mixture is pyrolyzed and carbonized at a temperature of 950 °C. The pyrolysis and carbonization time is 4 hours to deposit and grow a surface carbon layer on the surface of product 3. The thickness of the surface carbon layer is controlled within 30 nm to obtain a negative electrode material.

Comparative Example 2

The negative electrode material is prepared in the same manner as Example 1 except for the following conditions.
Step S1. The vapor deposition method is adopted to alternately deposit carbon and silicon. Specifically, in a sealed chamber under the protective gas atmosphere (nitrogen), first the carbon source methane is introduced into the sealed chamber, and heated to make the internal ambient temperature of the sealed chamber to rise to 850 °C. Carbon is deposited at a temperature of 850 °C, the deposition time of carbon is 10 minutes, the flow rate of methane and gas is 10 L/min, so that the deposition rate of carbon is 10 nm/min, and the unit size of carbon deposited in a single time is 100 nm. Then, silane is introduced into the sealed chamber, the deposition time of silicon is 2 minutes, the flow rate of nitrogen is 20 L/min, and the flow rate of silane is 5 L/min, so that the ratio of deposition rate of carbon to deposition rate of silicon is 5: 1, the particle size of silicon deposited in a single time is 4 nm (particle size of silicon deposited in a single time = deposition rate of carbon / (ratio of deposition rate of carbon to deposition rate of silicon) × deposition time of silicon). The particle size of the carbon deposited in a single time is 100 nm (the particle size of the carbon deposited in a single time = deposition rate of carbon × deposition time of carbon). In this way, the depositions are alternately carried out, and the deposition rate and time remain unchanged during the alternating deposition process, and a product A is obtained.
During the deposition process, ammonium polyphosphate is added to the sealed chamber, and the amount of ammonium polyphosphate is 0.1 mg/min.

Comparative Example 3

The negative electrode material is prepared in the same manner as Example 1 except for the following conditions.
Step S1. The vapor deposition method is adopted to alternately deposit carbon and silicon. Specifically, in a sealed chamber under the protective gas atmosphere (nitrogen), first the carbon source methane is introduced into the sealed chamber, and heated to make the internal ambient temperature of the sealed chamber to rise to 850 °C. Carbon is deposited at a temperature of 850 °C, the deposition time of carbon is 10 minutes, the flow rate of nitrogen is 20 L/min, the flow rate of methane is 10 L/min, so that the deposition rate of carbon is 10 nm/min, and the unit size of carbon deposited in a single time is 100 nm. Then, silane is introduced into the sealed chamber, the deposition time of silicon is 2 minutes, the flow rate of nitrogen is 20 L/min, and the flow rate of silane is 5 L/min, so that the ratio of deposition rate of carbon to deposition rate of silicon is 5: 1, the particle size of silicon deposited in a single time is 4 nm (particle size of silicon deposited in a single time = deposition rate of carbon / (ratio of deposition rate of carbon to deposition rate of silicon) × deposition time of silicon). The particle size of the carbon deposited in a single time is 100 nm (the particle size of the carbon deposited in a single time = deposition rate of carbon × deposition time of carbon). In this way, the depositions are alternately carried out, and the deposition rate and time remain unchanged during the alternating deposition process, and a product A is obtained.
During the deposition process, the amount of ammonium polyphosphate added to the sealed chamber is 0.5 mg/min.

Comparative Example 4

The Comparative Example provides a method for preparing a negative electrode material. The specific steps are as follows.
Step S1. The vapor deposition method is adopted to alternately deposit carbon and silicon. Specifically, in a sealed chamber under the protective gas atmosphere (nitrogen), first the carbon source methane is introduced into the sealed chamber, and heated to make the internal ambient temperature of the sealed chamber to rise to 850 °C. Carbon is deposited at a temperature of 850 °C, the deposition time of carbon is 10 minutes, the flow rate of nitrogen is 20 L/min, the flow rate of methane is 10 L/min, so that the deposition rate of carbon is 10 nm/min, and the unit size of carbon deposited in a single time is 100 nm. Then, silane is introduced into the sealed chamber, the deposition time of silicon is 10 minutes, the flow rate of silane is 100 L/min, so that the ratio of deposition rate of carbon to deposition rate of silicon is 1:4, the particle size of silicon deposited in a single time is 400 nm (particle size of silicon deposited in a single time = deposition rate of carbon / (ratio of deposition rate of carbon to deposition rate of silicon) × deposition time of silicon). The particle size of the carbon deposited in a single time is 100 nm (the particle size of the carbon deposited in a single time = deposition rate of carbon × deposition time of carbon). In this way, the depositions are alternately carried out, and the deposition rate and time remain unchanged during the alternating deposition process, and a product A is obtained.

Comparative Example 5

The negative electrode material is prepared in the same manner as Example 1 except for the following conditions.

Step S1. The vapor deposition method is adopted to alternately deposit carbon and silicon. Specifically, in a sealed chamber under the protective gas atmosphere (nitrogen), first the carbon source methane is introduced into the sealed chamber, and heated to make the internal ambient temperature of the sealed chamber to rise to 850 °C. Carbon is deposited at a temperature of 850 °C, the deposition time of carbon is 20 minutes, the flow rate of nitrogen is 20 L/min, the flow rate of methane is 20 L/min, so that the deposition rate of carbon is 20 nm/min, and the unit size of carbon deposited in a single time is 100 nm. Then, silane is introduced into the sealed chamber, the deposition time of silicon is 2 minutes, the flow rate of silane is 5 L/min, so that the ratio of deposition rate of carbon to deposition rate of silicon is 5: 1, the particle size of silicon deposited in a single time is 4 nm (particle size of silicon deposited in a single time = (deposition rate of carbon / (ratio of deposition rate of carbon to deposition rate of silicon) × deposition time of silicon). The particle size of the carbon deposited in a single time is 400 nm (the particle size of the carbon deposited in a single time = deposition rate of carbon × deposition time of carbon). In this way, the depositions are alternately carried out, and the deposition rate and time remain unchanged during the alternating deposition process, and a product A is obtained.

Test

The negative electrode materials prepared in Examples 1 to 4 and Comparative Examples 1 to 5 are tested in terms of silicon element/carbon element distribution, compacted density, specific surface area, first-time efficiency, and cycle life. The test results are shown in Table 1.

Table 1 Test results

| Group | Silicon element/ carbon element distribution degree R | Compacted density / (g/cm$^3$) | Specific surface area / (m$^2$/g) | Particle size of silicon deposited in a single time / (nm) | Particle size of carbon deposited in a single time / (nm) | First-time efficiency / / (%) | Cycle life / (cycle) |
|---|---|---|---|---|---|---|---|
| Example 1 | 0 | 1.5 | 2.32 | 4 | 100 | 92.3 | 1000 |
| Example 2 | 0.21 | 1.5 | 2.31 | 10 | 100 | 90.2 | 830 |
| Example 3 | 0.49 | 1.5 | 2.35 | 20 | 100 | 89.4 | 710 |
| Example 4 | 0.21 | 1.3 | 8.1 | 4 | 100 | 87.1 | 600 |
| Comparative Example 1 | 0.6 | 1.5 | 7.2 | 6000 | 6000 | 75.1 | 320 |
| Comparative Example 2 | 0.21 | 0.3 | 10.1 | 4 | 100 | 83.1 | 330 |
| Comparative Example 3 | 0.21 | 0.23 | 25.1 | 4 | 100 | 81.1 | 230 |
| Comparative Example 4 | 0.54 | 1.5 | 8.1 | 400 | 100 | 79.4 | 350 |
| Comparative Example 5 | 0.61 | 1.5 | 20.2 | 4 | 400 | 75.4 | 480 |

As can be seen from Table 1, the first-time efficiency of the lithium-ion secondary battery made of the negative electrode sheet made of the negative electrode material of Examples 1 to 4 is ≥87.1%, and the cycle life is ≥600 cycles. This result shows that the lithium-ion secondary battery made of the negative electrode sheet made of the negative electrode material of the present disclosure has excellent long cycle life performance.

It can be seen from Table 1 that the silicon element/carbon element distribution degree R of the negative electrode material of Comparative Example 1 is >0.5 (specifically 0.6), and the cycle life of the lithium-ion secondary battery made of the negative electrode sheet made of made of the negative electrode material is only 320 cycles. The silicon element/carbon element distribution degree R of the negative electrode material of Examples 1 to 4 is <0.5, and the cycle life of the lithium-ion secondary battery made of the negative electrode sheet made of the negative electrode material is 600 to 1000 cycles. This result shows that, by controlling the silicon element/carbon element distribution degree of the negative electrode material within a specific selected range (silicon element/carbon element distribution degree R≤0.5), it is possible to ensure the structural stability of the lithium-ion secondary battery made of the negative electrode sheet made of the negative electrode material during the charging and discharging processes (specifically, the lithium de-intercalation process), thereby increasing the long cycle life of the lithium-ion secondary battery made of the negative electrode sheet made of the negative electrode material.

It can be seen from Table 1 that the compacted density of the negative electrode material of Comparative Example 2 is less than 0.5 $g/cm^3$ (specifically 0.3 $g/cm^3$), and the cycle life of the lithium-ion secondary battery made of the negative electrode sheet made of the negative electrode material is only 330 cycles. The compacted density of the negative electrode material of Examples 1 to 4 is 1.3 $g/cm^3$ to 1.5 $g/cm^3$, and the cycle life of the lithium-ion secondary battery made of the negative electrode sheet made of the negative electrode material is 600 cycles to 1000 cycles. This result shows that, by controlling the compaction density of the negative electrode material within a specific selected range (0.5 $g/cm^3$ to 2.5 $g/cm^3$), it is possible to ensure the skeleton strength of the negative electrode material, thereby further ensuring the structural stability of the lithium-ion secondary battery made of the negative electrode sheet made of the negative electrode material during the charging and discharging processes (specifically, the lithium de-intercalation process), thereby increasing the long cycle life of the lithium-ion secondary battery made of the negative electrode sheet made of the negative electrode material.

It can be seen from Table 1 that the specific surface areas of the negative electrode materials of Comparative Example 3 and Comparative Example 5 are both >15 $m^2/g$ (specifically 25.1 $m^2/g$ and 20.2 $m^2/g$ respectively), and the cycle life of the lithium-ion secondary battery made of the negative electrode sheet made of the negative electrode material is 230 cycles and 480 cycles respectively. In comparison, the specific surface areas of the negative electrode materials in Examples 1 to 4 are all <15 $m^2/g$, and the cycle life of the lithium ion secondary battery made of the negative electrode sheet made of the negative electrode material is 600 cycles to 1000 cycles. This result shows that, by controlling the specific surface area of the negative electrode material within a specific selected range ($\leq$15 $m^2/g$), it is possible to ensure limited film formation on the surface of the negative electrode material, thereby ensuring the first-time efficiency (i.e. first-time Coulomb efficiency) of the lithium-ion secondary battery made of the negative electrode sheet made of the negative electrode, thereby increasing the long cycle life of the lithium-ion secondary battery made of the negative electrode sheet made of the negative electrode material.

**Claims**

1. A negative electrode material, comprising: a carbon layer (1); and a silicon layer (2) located on at least a part of a surface of the carbon layer (1), wherein the negative electrode material satisfies a following relationship: R$\leq$0.5, wherein R is a silicon element/carbon element distribution degree of the negative electrode material, and R satisfies a following relationship:

$$R = \sqrt{\frac{(X_1 - \overline{X})^2 + (X_2 - \overline{X})^2 + \cdots\cdots(X_n - \overline{X})^2}{n}} \; ;$$

   wherein

$$\overline{X} = \frac{X_1 + X_1 + \cdots\cdots + X_n}{n} \; ;$$

   wherein $X_1$, $X_2$ and $X_n$ are respectively ratios of a mass content of a silicon element to a mass content of a carbon element at a first point, a second point and an n-th point on a line obtained by section-cutting a negative electrode sheet made of the negative electrode material with an argon ion etching instrument through performing a line scan analysis with an energy spectrometer, and n is a total number of points on the line.

2. The negative electrode material according to claim 1, wherein the silicon element/carbon element distribution degree R of the negative electrode material satisfies a following relationship: R$\leq$0.1.

3. The negative electrode material according to claim 1, wherein the negative electrode material has a compacted density of 0.5 $g/cm^3$ to 2.5 $g/cm^3$.

4. The negative electrode material according to claim 3, wherein the negative electrode material has the compacted density of 0.9 g/cm$^3$ to 2.5 g/cm$^3$.

5. The negative electrode material according to claim 1, wherein a specific surface area of the negative electrode material is ≤15 m$^2$/g.

6. The negative electrode material according to claim 5, wherein the specific surface area of the negative electrode material is ≤8 m$^2$/g.

7. The negative electrode material according to claim 1, wherein the silicon layer (2) is made of a silicon-based material with a particle size of ≤ 200 nm.

8. The negative electrode material according to claim 1, wherein the carbon layer (1) is made of a carbon-based material with a particle size of ≤ 200 nm.

9. An electrochemical device, comprising a negative electrode sheet, wherein the negative electrode sheet comprises a negative electrode current collector and a negative electrode active substance layer located on the negative electrode current collector, the negative electrode active substance layer comprises the negative electrode material according to claim 1.

10. The electrochemical device according to claim 9, wherein the silicon element/carbon element distribution degree R of the negative electrode material satisfies a following relationship: R≤0.1.

11. The electrochemical device according to claim 9, wherein the negative electrode material has a compacted density of 0.5 g/cm$^3$ to 2.5 g/cm$^3$.

12. The electrochemical device according to claim 9, wherein a specific surface area of the negative electrode material is ≤15 m$^2$/g.

13. The electrochemical device according to claim 9, wherein the silicon layer (2) is made of a silicon-based material with a particle size of ≤ 200 nm.

14. The electrochemical device according to claim 9, wherein the carbon layer (1) is made of a carbon-based material with a particle size of ≤ 200 nm.

15. An electronic device, comprising the electrochemical device according to claim 9.

C-Si co-deposition

Surface coating

Europäisches
Patentamt

European
Patent Office

Office européen
des brevets

## EUROPEAN SEARCH REPORT

Application Number

EP 23 21 8001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2012 043547 A (HITACHI CHEMICAL CO LTD) 1 March 2012 (2012-03-01) | 1,2, 5-10, 12-15 | INV. H01M4/133 H01M4/134 |
| Y | * claim 1 * <br> * paragraph [0029] - paragraph [0034] * <br> * paragraphs [0045], [0048], [0084] * <br> ----- | 3,4,11 | H01M4/1393 H01M4/1395 H01M4/36 H01M4/38 |
| Y | CN 106 159 229 B (SHENZHEN BTR NEW ENERGY MAT INC) 24 January 2020 (2020-01-24) <br> * claim 1 * <br> * figure 3 * <br> * paragraph [0069] * <br> ----- | 3,4,11 | H01M10/052 H01M4/583 H01M4/02 |
| Y | CN 108 288 705 A (SHENZHEN PURUI ENERGY TECH CO LTD) 17 July 2018 (2018-07-17) <br> * claims 1,3 * <br> * example 1 * <br> * paragraph [0077] * <br> ----- | 3,4,11 | |

TECHNICAL FIELDS
SEARCHED       (IPC)

H01M

The present search report has been drawn up for all claims

| Place of search | Date of completion of the search | Examiner |
|---|---|---|
| Munich | 10 May 2024 | Galbiati, Ivano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ...........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 8001

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2024

| Patent document cited in search report | | Publication date | Patent family member(s) | | Publication date |
|---|---|---|---|---|---|
| JP 2012043547 | A | 01-03-2012 | JP | 5494344 B2 | 14-05-2014 |
| | | | JP | 2012043547 A | 01-03-2012 |
| CN 106159229 | B | 24-01-2020 | NONE | | |
| CN 108288705 | A | 17-07-2018 | NONE | | |

EPO FORM P0459

For more details about this annex : see Official Journal of the European Patent Office, No. 12/82

**EP 4 439 702 A1**

**REFERENCES CITED IN THE DESCRIPTION**

**Patent documents cited in the description**

- CN 102709566 A

- CN 113871604 A